# EUROPÄISCHE PATENTSCHRIFT

(11) **EP 1 989 083 B1**
(45) Veröffentlichungstag und Bekanntmachung des Hinweises auf die Patenterteilung: **03.06.2009**
(21) Anmeldenummer: 07711587.1
(22) Anmeldetag: 14.02.2007
(51) Int. Cl.: B60R 22/03

(54) **VERFAHREN ZUR STEUERUNG EINES GURTBRINGERS UND GURTBRINGER FÜR EIN KRAFTFAHRZEUG**
METHOD FOR CONTROLLING A BELT HAND-OVER DEVICE AND BELT HAND-OVER DEVICE FOR A MOTOR VEHICLE
PROCÉDÉ POUR COMMANDER UN APPROCHE-CEINTURE ET APPROCHE-CEINTURE POUR VÉHICULE À MOTEUR

(30) Priorität: 23.02.2006 DE 102006008930
(43) Veröffentlichungstag der Anmeldung: 12.11.2008
(73) Patentinhaber: Brose Fahrzeugteile GmbH & Co. KG, Coburg, 96450 Coburg (DE)
(72) Erfinder: FREISLEBEN, Bernd, 96231 Bad Staffelstein (DE); DITTRICH, Alexander, 96482 Ahorn (DE)
(74) Vertreter: Ninnemann, Detlef
(86) Internationale Anmeldenummer: PCT/EP2007/001432
(87) Internationale Veröffentlichungsnummer: WO 2007/096122

(56) Entgegenhaltungen:
- DE-A1- 3 302 163
- DE-A1- 3 537 089
- DE-A1- 19 901 276
- GB-A- 2 235 361
- GB-A- 2 235 362
- US-A1- 2001 040 369

## Beschreibung

Die Erfindung betrifft ein Verfahren zur Steuerung eines Gurtbringers gemäß dem Oberbegriff des Anspruchs 1 sowie einen Gurtbringer für ein Kraftfahrzeug gemäß dem Oberbegriff des Anspruchs 7, wie es z.B. aus DE-A-33 02 163 bekannt ist.

Gurtbringer für Kraftfahrzeuge dienen dazu, einen insbesondere in Cabriolets oder Coupés weit hinter einem Fahrzeugsitz vorgehaltenen Sicherheitsgurt aufzunehmen und in eine für den Fahrzeuginsassen ergonomisch günstige Anbietposition zu bewegen, wo ihn der Fahrzeuginsasse leicht ergreifen und anlegen kann. Der in einer Ruheposition in eine Ausnehmung der Innenverkleidung des Kraftfahrzeugs zurückgezogene Gurtbringer enthält eine am Ende einer Vorschubeinrichtung angeordnete Gurtfangeinrichtung, die zur Aufnahme und zum Zuführen des Sicherheitsgurts mittels der Vorschubeinrichtung aus der Ruheposition in der Innenverkleidung des Kraftfahrzeugs herausbewegt wird, den Sicherheitsgurt aufnimmt und in die Anbietposition bewegt.

Die Gurtfangeinrichtung enthält einen den Sicherheitsgurt aufnehmenden Gurtfinger, der in der Ruheposition des Gurtbringers vor Beginn der Zuführung des Sicherheitsgurts in die Anbietposition an der Vorschubeinrichtung anliegt, sowie eine Schwenkeinrichtung, die den Gurtfinger während der Zuführbewegung des Gurtbringers in eine quer zur Bewegungsbahn verlaufende Ausschwenkposition verschwenkt, in der der Gurtfinger mit einer geschwungenen Fangfläche den Sicherheitsgurt ergreift und durch eine Vorschubbewegung der Vorschubeinrichtung in die Anbietposition bewegt. Nachdem der Fahrzeuginsasse den Sicherheitsgurt ergriffen und angelegt hat oder eine vorgegebene Anbietzeit abgelaufen ist, wird die Gurtfangeinrichtung durch eine Rückführbewegung der Vorschubeinrichtung von der Anbietposition in die Ruheposition zurückbewegt und der Gurtfinger vor dem Einfahren der Gurtfangeinrichtung in die Ausnehmung der Innenverkleidung des Kraftfahrzeugs von der quer zur Bewegungsbahn ausgerichteten Ausschwenkposition in eine parallel zur Bewegungsbahn verlaufende Einschwenkposition zurückbewegt.

Das Ein- und Ausschwenken des Gurtfingers wird durch ein Auslöseelement initiiert, das in Wirkverbindung mit der Vorschubeinrichtung steht. Damit bei der Zuführbewegung des Gurtbringers die durch den von einem Aufrollmechanismus abgerollten Sicherheitsgurt auf den Gurtfinger der Gurtfangeinrichtung ausgeübte Kraft nicht zu einem Rückschwenken des Gurtfingers aus der Ausschwenkposition in die Einschwenkposition führt, weist die Gurtfangeinrichtung eine Verriegelungseinrichtung auf, die den quer zur Bewegungsbahn ausgeschwenkten Gurtfinger zumindest bis zum Vorschub des Gurtbringers in die Anbietposition in der Ausschwenkposition verriegelt.

Wesentlich für eine einwandfreie Funktion des Gurtbringers ist es, dass der Gurtfinger bei der Zuführbewegung in die Anbietposition den Sicherheitsgurt sicher aufnimmt und bei der Rückführung des Gurtbringers in die Ruheposition den Sicherheitsgurt nicht in die Ausnehmung der Innenverkleidung einzieht, so dass Gurtbringer und Sicherheitsgurt verklemmen oder bei einer nachfolgenden Betätigung der Sicherheitsgurt nicht vom Gurtfinger aufgenommen und in die Anbietposition gebracht werden kann. Die Gefahr des ungewollten Einfädelns des Sicherheitsgurtes bei der Rückführbewegung besteht beispielsweise dann, wenn der Sicherheitsgurt bei der Zuführbewegung, in der Anbietposition oder bei der Rückführung verrutscht oder vom Fahrzeuginsassen in seine aufgerollte Stellung gebracht wird bevor der Gurtbringer nach Ablauf der Anbietzeit in die Innenverkleidung zurückfährt.

Insbesondere zur Vermeidung eines ungewollten Einfädelns des Gurtbringers in den Sicherheitsgurt sind sogenannte Gurtabweiser in Form von Bändern oder Schnüren bekannt, die getrennt vom Gurtbringer angeordnet sind und ein ungewolltes Hineinziehen des Sicherheitsgurtes in die Innenverkleidung des Kraftfahrzeugs verhindern. Diese Gurtabweiser erfordern jedoch zusätzlichen Herstellungs- und Montageaufwand und sind bezüglich des optischen Gesamteindrucks und Designs des Fahrzeuginnenraums nachteilig.

Der vorliegenden Erfindung liegt daher die Aufgabenstellung zugrunde, eine sichere Aufnahme des Sicherheitsgurtes bei der Zuführbewegung des Gurtbringers in die Anbietposition sowie Trennung des Gurtbringers vom Sicherheitsgurt bei der Rückführung des Gurtbringers in die Ruheposition mit minimalem Konstruktions- und Teileaufwand sowie ohne Anordnung vom Gurtbringer getrennter Bauteile zu gewährleisten.

Diese Aufgabe wird erfindungsgemäß durch ein Verfahren mit den Merkmalen des Anspruchs 1 sowie durch einen Gurtbringer mit den Merkmalen des Anspruchs 7 gelöst.

Die erfindungsgemäße Lösung gewährleistet ein sicheres Ein- und Ausfädeln des Gurtbringers in und aus dem Sicherheitsgurt ohne die Anordnung zusätzlicher Bauteile wie Gurtabweiser im Innenraum eines Kraftfahrzeugs und damit ein gefälliges Aussehen und optimales Design sowie einen minimalen Kostenaufwand durch einen geringen, nur ein zusätzliches Bauteil zu bestehenden Gurtbringersystemen erforderlichen Bauteile- und Konstruktionsaufwand.

Die erfindungsgemäße Lösung beinhaltet die grundsätzliche Funktion, den Gurtfinger der Gurtfangeinrichtung bei der Zuführbewegung des Gurtbringers aus der Ruheposition in die Anbietposition frühestmöglich in die Ausschwenkposition auszuschwenken und bei der Rückführbewegung mit möglichst großem Abstand zur Ruheposition des Gurtbringers wieder in die Einschwenkposition einzuschwenken und dadurch einerseits eine sichere Aufnahme des Sicherheitsgurtes aus dessen Bereitstellungsposition zu gewährleisten und andererseits ein Einziehen des Sicherheitsgurtes in die Innenverkleidung des Kraftfahrzeugs durch ein frühzeitiges Zurückschwenken des Gurtfingers in die Einschwenkposition zu verhindern.

Vorzugsweise wird der Gurtfinger bei der Zuführbewegung des Gurtbringers aus der Ruheposition in die Anbietposition und bei der Rückführbewegung des Gurtbringers aus der Anbietposition in die Ruheposition in vorgegebenen Abständen vor dem Erreichen des in seiner Bereitstellungsposition befindlichen Sicherheitsgurtes in seine Ausschwenkposition bzw. Einschwenkposition verschwenkt.

Durch die Vorgabe von Abständen in Bezug auf die Bereitstellungsposition des Sicherheitsgurtes kann sichergestellt werden, dass der Gurtfinger entweder zur Aufnahme des Sicherheitsgurtes bereit ist oder der Gurtfinger am Sicherheitsgurt vorbeibewegt wird, ohne dass der Sicherheitsgurt in den Gurtfinger einfädelt bzw. bei einem inkorrekten Sitz des Sicherheitsgurtes auf dem Gurtfinger, wenn dieser durch fehlende Abnahme des Fahrzeuginsassen zusammen mit dem Sicherheitsgurt zurückgeführt wird, der Sicherheitsgurt den Gurtbringer hinreichend vor der Ruheposition verlassen hat.

In weiterer Ausgestaltung des erfindungsgemäßen Verfahrens wird der Gurtbringer bei der Rückführbewegung in ein Gehäuse bewegt, wobei der Gurtfinger in der Ruheposition des Gurtbringers vorzugsweise eine Gehäuseöffnung bündig abschließt, und der Gurtfinger bei der Zuführbewegung während des Verlassens oder unmittelbar nach dem Verlassen des Gehäuses in die Ausschwenkposition verschwenkt.

Dieses weiterführende Merkmal ermöglicht die Unterbringung des Gurtbringers in einem vorzugsweise in der Innenverkleidung eines Kraftfahrzeugs vorgesehenen Aufnahmegehäuses mit einem in der Ruheposition bündigen Abschluss des Gurtbringers mit der Innenverkleidung bei gleichzeitiger Gewährleistung, dass der Gurtfinger vor dem Erreichen der Bereitstellungsposition des Sicherheitsgurtes ausgeschwenkt und zur Aufnahme des Sicherheitsgurtes bereit ist.

In weiterer Ausgestaltung des erfindungsgemäßen Verfahrens wird der Gurtfinger bei der Rückführbewegung mit größtmöglichem Abstand zum Gehäuse in die Einschwenkposition verschwenkt, das heißt im Extremfall unmittelbar nach dem Erreichen der Anbietposition und Ablauf der Anbietzeit mit oder vor Einleitung der Rückführbewegung des Gurtbringers.

Vorzugsweise wird das Ein- und Ausschwenken des Gurtfingers in die Einschwenk- und Ausschwenkposition mittels einer Hysteresesteuerung ausgelöst, mit der die unterschiedlichen Positionen beim Ein- und Ausschwenken des Gurtfingers reproduzierbar sichergestellt sind, wobei die Hysteresesteuerung sowohl mechanisch als auch elektronisch ausgebildet werden kann.

Während sich eine mechanische Hysteresesteuerung insbesondere durch die einfache Realisierung mit nur einem zusätzlichen Bauteil gegenüber bekannten Gurtbringersteuerungen auszeichnet, ermöglicht eine elektronische oder kombiniert mechanisch/elektronische Hysteresesteuerung die Berücksichtigung zusätzlicher Sensorsignale, wie Krafteinwirkung auf den Gurtbringer, Verriegelung des Sicherheitsgurtschlosses, Betätigung eines Sitzsensors und dergleichen.

Um sicherzustellen, dass der Gurtfinger auch bei einem Einsatz des erfindungsgemäßen Verfahrens unter Einwirkung der durch das Abrollen des Sicherheitsgurtes von einem Aufrollmechanismus ausgeübten Kraft nicht in die Einschwenkposition zurückgeschwenkt wird, ist vorgesehen, dass der Gurtfinger bei der Zuführbewegung des Gurtbringers vor der Aufnahme des Sicherheitsgurtes in der Ausschwenkposition verriegelt und bei der Rückführung des Gurtbringers einriegelt wird.

Um bei einer Verriegelung des Gurtfingers ein Rückführen des Gurtbringers auch im manuellen Notfallbetrieb ohne mechanische Beschädigung des Gurtbringers zu ermöglichen, ist in weiterer Ausgestaltung des erfindungsgemäßen Verfahrens der in der Ausschwenkposition verriegelte Gurtfinger durch Krafteinwirkung auf den Gurtfinger in seine Einschwenkposition bewegbar und der Gurtbringer manuell in die Ruheposition verschiebbar.

Durch die Verriegelung des Gurtfingers in der Ausschwenkposition vor Erreichen des Sicherheitsgurtes sowie die Überwindung der Verriegelung im Notfallbetrieb wird erreicht, dass das Schwenkelement auch in verriegeltem Zustand durch manuellen Kraftaufwand eingeschwenkt werden kann. Dabei wird die Verriegelung während der Rückführung des Gurtbringers automatisch aufgehoben, unabhängig davon, ob die Rückführung in normalem Betrieb über einen Antrieb oder im Notfallbetrieb manuell erfolgt. Durch eine solche Verriegelungsvorrichtung wird sicher gestellt, dass bei manueller Rückführung, zum Beispiel bei Ausfall der elektrischen Versorgung, der Gurtbringer mechanisch nicht beschädigt wird und insbesondere der Gurtfinger nicht abbricht.

Ein Gurtbringer für ein Kraftfahrzeug mit einer Gurtfangeinrichtung zum Aufnehmen und Zuführen eines Sicherheitsgurtes in eine für einen Kraftfahrzeuginsassen ergonomisch günstige Anbietposition, einer Vorschubeinrichtung zum Bewegen der Gurtfangeinrichtung von einer Ruheposition in die Anbietposition, wobei die Gurtfangeinrichtung einen schwenkbar an der Vorschubeinrichtung angelenkten Gurtfinger, eine Schwenkeinrichtung, die den Gurtfinger von einer mit der Bewegungsbahn des Gurtbringers im Wesentlichen übereinstimmenden Einschwenkposition in eine im Wesentlichen quer zur Bewegungsbahn des Gurtbringers ausgerichtete Ausschwenkposition verschwenkt und eine den Gurtfinger in der Ausschwenkposition verriegelnde Verriegelungseinrichtung enthält, ist zur Lösung der vorstehend genannten Aufgabenstellung durch eine das Aus- und Einschwenken des Gurtfingers bei der Zuführ- und Rückführbewegung des Gurtbringers an unterschiedlichen Positionen der Bewegungsbahn des Gurtbringers zwischen der Ruheposition und der Anbietposition auslösende Steuereinrichtung gekennzeichnet.

Der erfindungsgemäße Gurtbringer gewährleistet ein sicheres Ein- und Ausfädeln des Gurtbringers in und aus dem Sicherheitsgurt ohne die Anordnung zusätzlicher Bauteile wie Gurtabweiser im Innenraum eines Kraftfahrzeugs und damit ein gefälliges Aussehen und optimales Design sowie einen minimalen Kostenaufwand durch einen geringen, nur ein zusätzliches Bauteil zu bestehenden Gurtbringersystemen erforderlichen Bauteile-und Konstruktionsaufwand. Dabei wird die Gurtfangeinrichtung so gesteuert, dass der Gurtfinger bei der Zuführbewegung des Gurtbringers aus der Ruheposition in die Anbietposition frühestmöglich in die Ausschwenkposition ausschwenkt, während er bei der Rückführbewegung mit möglichst großem Abstand zur Ruheposition des Gurtbringers wieder in die Einschwenkposition einschwenkt, so dass eine sichere Aufnahme des Sicherheitsgurtes aus dessen Bereitstellungsposition gewährleistet ist und ein Einziehen des Sicherheitsgurtes in die Innenverkleidung des Kraftfahrzeugs durch ein frühzeitiges Zurückschwenken des Gurtfingers in die Einschwenkposition verhindert wird.

Vorzugsweise steuert die Steuereinrichtung eine Relativbewegung von Teilen der Vorschubeinrichtung derart, dass mindestens ein Teil der Vorschubeinrichtung auf ein die Schwenkbewegungen des Gurtfingers in die Aus- und Einschwenkposition initiierendes Auslöseelement einwirkt.

Durch das Einwirken der Vorschubeinrichtung auf ein die Schwenkbewegungen des Gurtfingers in die Aus- und Einschwenkposition initiierendes Auslöseelement wird eine einfache Steuerung des Ein- und Ausschwenkens des Gurtfingers durch die Zuführ- und Rückführbewegung der Vorschubeinrichtung und damit eine einfache mechanische oder elektronische Steuerung des Ein- und Ausschwenkens des Gurtfingers im Verlauf der Bewegungsbahn des Gurtbringers ermöglicht.

Vorzugsweise ist die Steuereinrichtung als Hysteresesteuerung ausgebildet ist, die während der Zuführbewegung des Gurtbringers das Ausschwenken des Gurtfingers in die Ausschwenkposition nahe der Ruheposition des Gurtbringers und während der Rückführbewegung des Gurtbringers das Einschwenken des Gurtfingers in die Einschwenkposition nahe der Anbietposition auslöst.

Die Ausgestaltung der Steuereinrichtung als Hysteresesteuerung ermöglicht es, die unterschiedlichen Positionen des Ein- und Ausschwenkens des Gurtfingers mit einer beliebigen Längendifferenz zwischen beiden Positionen festzulegen und somit die Gegebenheiten der Bewegungsbahn des Gurtbringers sowie die Positionierung des Sicherheitsgurtes in seiner Bereitstellungsposition zu berücksichtigen.

Vorzugsweise ist die Hysteresesteuerung der Steuereinrichtung als mit der Vorschubeinrichtung zusammenwirkende mechanische Kulissensteuerung ausgebildet.

Die Ausbildung der Hysteresesteuerung der Steuereinrichtung als Kulissensteuerung schafft die Voraussetzung für eine durch die Hinzuführung eines einzelnen Bauteils einfache und durch das Zusammenwirken mit der Vorschubeinrichtung sichere Maßnahme zum Ein- und Ausschwenken des Gurtfingers in die vorgebbare Ein- und Ausschwenkposition.

Eine Ausgestaltung der Steuereinrichtung als mechanische Hysteresesteuerung ist dadurch gekennzeichnet, dass die Kulissensteuerung eine Kulisse, die in einer den Gurtfinger und das Auslöseelement aufnehmenden Schubstange der Vorschubeinrichtung angeordnet ist, einen mit der Kulisse zusammenwirkenden Mitnehmer, der an einem auf der Schubstange in der Bewegungsbahn des Gurtbringers gleitend angeordneten und auf das Auslöseelement einwirkenden Schieber angelenkt ist und zwei mit dem Mitnehmer zusammenwirkende Freigänge aufweist, die beabstandet zueinander in einer den Schieber formschlüssig aufnehmenden, hülsenförmigen Führungseinrichtung der Vorschubeinrichtung angeordnet sind, wobei der Gurtfinger bei einem Kontakt des Schiebers mit dem Auslöseelement in die Einschwenkposition und bei fehlendem Kontakt des Schiebers mit dem Auslöseelement in die Ausschwenkposition verschwenkt ist.

Durch die Ausgestaltung der Kulisse mit einem parallel zur Bewegungsbahn des Gurtbringers verlaufenden Abschnitt und an dessen Enden senkrecht zur Bewegungsbahn des Gurtbringers verlaufenden Freischnitten in Verbindung mit als keilförmige Einschnitte in der Innenfläche der hülsenförmigen Führungseinrichtung ausgebildeten Freigängen, in die ein keilförmiger Dorn des schwenkbar am Schieber angelenkten Mitnehmers eingreift, ist eine wechselseitige Bewegung des Mitnehmers zur Verriegelung mit der Schubstange oder der Führungseinrichtung gegeben, durch die nach einem weiteren Merkmal der erfindungsgemäßen Lösung die Schaltpunkte der Hysteresesteuerung festgelegt sind.

In weiterer Ausgestaltung der erfindungsgemäßen Lösung ist der Mitnehmer in Richtung der Freigänge angefedert, so dass der Eingriff des Mitnehmers in die als Arretierungspunkte dienenden Freigänge der Führungseinrichtung während der Vorschubbewegung der Schubstange gewährleistet ist.

Die in der Zeichnung dargestellten Ausführungsbeispiele sollen der Erläuterung der Erfindung sowie weiterer erfindungsgemäßer Varianten dienen. Es zeigen:
- Fig. 1-10: eine schematische Darstellung des erfindungsgemäßen Gurtbringers in verschiedenen Bewegungsphasen;
- Fig. 11: eine schematische Seitenansicht des Gurtbringers in der Ruheposition innerhalb der Innenverkleidung eines Kraftfahrzeugs und
- Fig. 12: eine schematische Seitenansicht des Gurtbringers in der Zuführbewegung mit in seine Ausschwenkposition verschwenktem Gurtfinger.

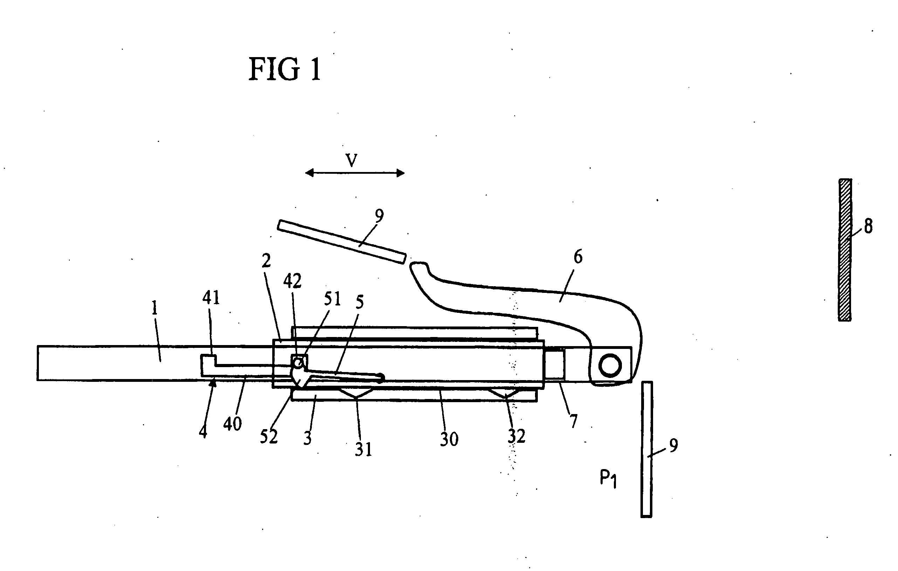

In den Fig. 1 - 10 ist der erfindungsgemäße Gurtbringer schematisch in verschiedenen Bewegungsphasen während der Zuführ- und Rückführbewegung des Gurtbringers von seiner in die Innenverkleidung 9 eines Kraftfahrzeugs versenkten Ruheposition P₁ bis zu einer Anbietposition P₂ dargestellt, in der der Gurtbringer einen während der Zuführbewegung aufgenommenen Sicherheitsgurt 8 etwa in Höhe der Schulter eines Fahrzeuginsassen und damit in ergonomisch günstiger Position anbietet, um den Nachteil von Kraftfahrzeugtypen wie Cabriolets und Coupés auszugleichen, dass die Bereitstellungsposition eines Sicherheitsgurtes weit hinter der Rückenlehne eines Kraftfahrzeugsitzes liegt.

Der Gurtbringer weist eine Vorschubeinrichtung mit einer elektromotorisch angetriebenen Schubstange 1 auf, die vorzugsweise als Zahnstange ausgebildet ist, in deren Längsverzahnung das Ritzel einer elektromotorischen Antriebseinrichtung eingreift, mit einem in Längsrichtung auf der Schubstange 1 formschlüssig gleitend angeordneten Schieber 2 und mit einer Führungseinrichtung 3, die hülsenförmig mit rechteck-, kreis- oder ellipsenförmigem Querschnitt zur Aufnahme des ein gleichartiges Querschnittsprofil aufweisenden Schiebers 2 ausgebildet ist. An dem der Antriebseinrichtung des Gurtbringers entgegengesetzten Ende der Schubstange 1 ist eine Gurtfangeinrichtung angeordnet, die einen schwenkbar am Ende der Schubstange 1 angelenkten Gurtfinger 6 und ein Auslöseelement 7 enthält. Die Vorschubeinrichtung ist über Befestigungselemente an der Führungseinrichtung 3 mit der Kraftfahrzeugkarosserie verbunden, wobei zur optisch gefälligen Anordnung des Gurtbringers eine gehäuseartige Ausnehmung in einer Innenverkleidung 9 des Kraftfahrzeugs vorgesehen ist, deren Öffnung in der Ruheposition P₁ des Gurtbringers durch den Gurtfinger 6 zur Erzielung eines geschlossenen Designs gemäß Fig. 1 verschlossen ist.

Im Abstand zum Gurtbringer in dessen Ruheposition P₁ ist ein ebenfalls schematisch im Querschnitt dargestellter Sicherheitsgurt 8 in seiner Bereitstellungsposition angeordnet, in der ein Aufrollmechanismus den Sicherheitsgurt 8 in gestraffter Form etwa in Richtung der Fahrzeughochachse ausgerichtet vorhält. Um den Sicherheitsgurt 8 aus dieser Bereitstellungsposition in die ergonomisch günstige Anbietposition zu verbringen, wird der Gurtbringer in Vorschubrichtung V entlang einer durch die Führungseinrichtung 3 vorgegebene Bewegungsbahn aus der in Fig. 1 dargestellten Ruheposition P₁ in Richtung der Anbietposition P₂ bewegt und dabei der Gurtfinger 6 aus seiner in Fig. 1 dargestellten Einschwenkposition, in der er im Wesentlichen parallel zur Längserstreckung der Schubstange 1 ausgerichtet ist, in eine senkrecht hierzu veriaufende Ausschwenkposition verschwenkt, in der er mit seiner Auffangfläche den Sicherheitsgurt 8 aufnimmt und bei weiterer Zuführbewegung der Schubstange 1 in die Anbietposition P₂ bewegt.

Um sicherzustellen, dass der Gurtfinger 6 rechtzeitig vor dem Erreichen des Sicherheitsgurtes 8 seine Ausschwenkposition einnimmt und in entgegengesetzter Bewegungsrichtung bei der Rückführung des Gurtbringers nach dem Verlassen der Anbietposition P₂ rechtzeitig vor dem Erreichen der Bereitstellungsposition des Sicherheitsgurtes 8 zurück in die in Fig. 1 dargestellte Einschwenkposition verschwenkt wird, ist eine Steuereinrichtung vorgesehen, die in diesem Ausführungsbeispiel als mechanische Hysteresesteuerung ausgebildet ist.

Die mechanische Hysteresesteuerung besteht aus einer Kulissensteuerung mit einer in der Schubstange 1 angeordneten Kulisse 4, einem mit dem Schieber 2 verbundenen, angefederten Mitnehmer 5 und in der Innenfläche 30 der Führungseinrichtung 3 beabstandet zueinander vorgesehenen Freigängen 31, 32 für den Mitnehmer 5. Die Kulisse 4 weist einen in Längsrichtung der Schubstange 1 und damit in Richtung der Bewegungsbahn des Gurtbringers verlaufenden Kulissenabschnitt 40 auf, dessen Enden quer zur Bewegungsbahn des Gurtbringers ausgerichtete Freischnitte 41, 42 enthalten. Ein Stift 51 des Mitnehmers 5 greift in die Kulisse 4 ein, während ein gegenüberliegender, keilförmiger Dorn 52 des schwenkbar am Schieber 2 angelenkten Mitnehmers 5 während der Vorschubbewegung der Schubstange 1 in die Freigänge 31, 32 an der Innenfläche 30 der Führungseinrichtung 3 eingreift. Um den Eingriff des Mitnehmers 5 in die Freigänge 31, 32 sicherzustellen, ist dieser in Richtung auf die Innenfläche 30 der Führungseinrichtung 3 angefedert.

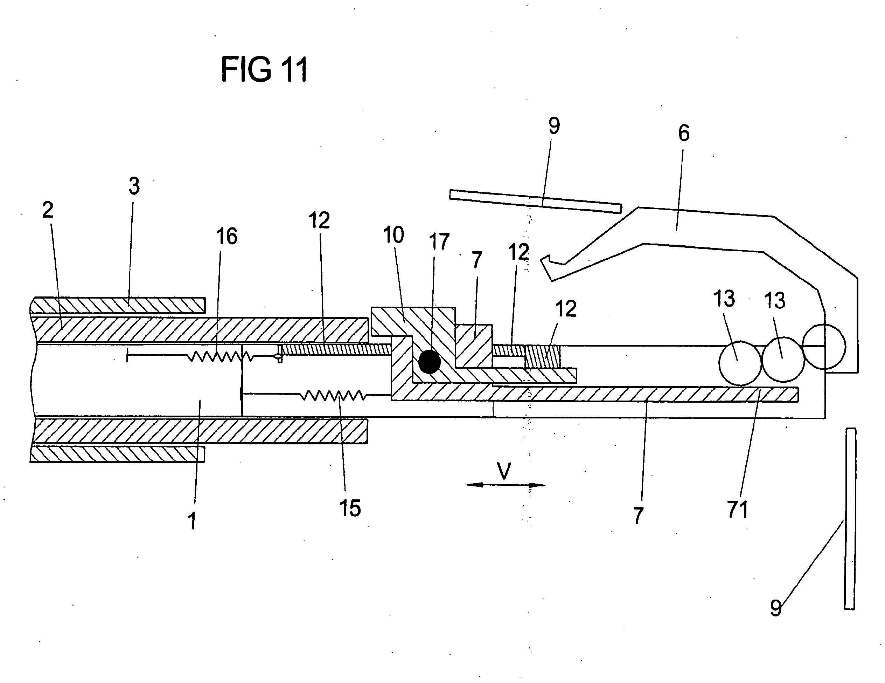

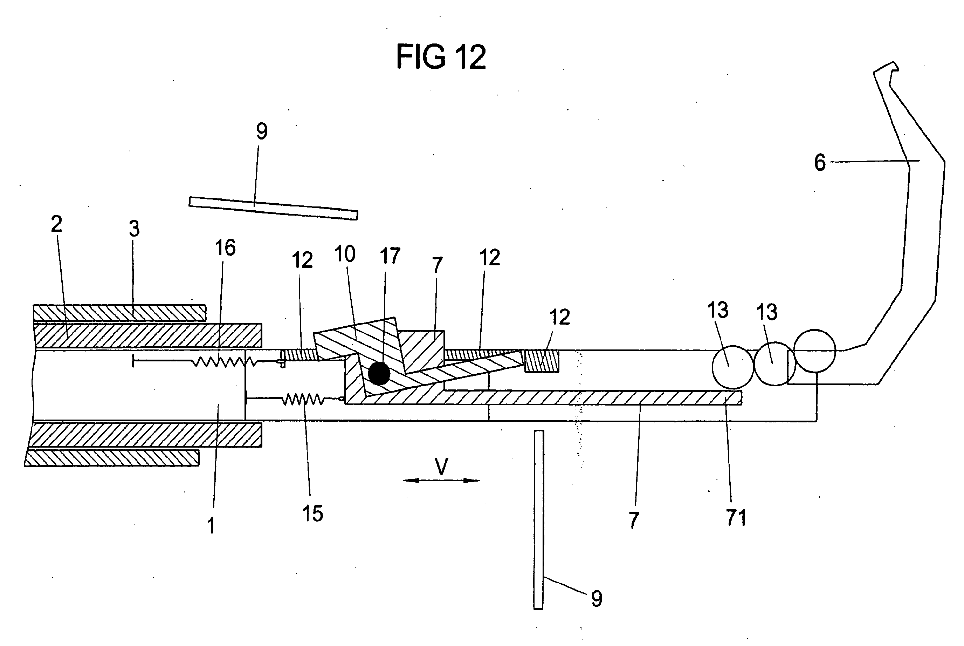

Das Ausschwenken des Gurtfingers 6 in seine Ausschwenkposition bzw. das Einschwenken des Gurtfingers 6 in seine in Fig. 1 dargestellte, im Wesentlichen parallel zur Ausrichtung der Schubstange 1 verlaufende Einschwenkposition wird durch ein Auslöseelement 7 gesteuert, bei dessen Wirkverbindung mit dem Schieber 2 sich der Gurtfinger 6 in seiner Einschwenkposition befindet, während bei fehlender Wirkverbindung zwischen Schieber 2 und Auslöseelement 7 der Gurtfinger 6 in seine Ausschwenkposition verschwenkt ist. Ein Ausführungsbeispiel der Konstruktion des Auslöseelements 7 und der Schwenkeinrichtung zum Verschwenken des Gurtfingers 6 in die Ein- und Ausschwenkposition, eine Verriegelungseinrichtung zur Sicherung der Ausschwenkposition des Gurtfingers 6 und eine Einrichtung zur manuellen Notfallbetätigung des Gurtbringers bei Ausfall oder Beschädigung der elektromotorischen Antriebseinrichtung ist in zwei verschiedenen Bewegungsphasen in den Fig. 11 und 12 dargestellt.

Ausgehend von der in Fig. 1 dargestellten Ruheposition des Gurtbringers mit in seiner Einschwenkposition befindlichem Gurtfinger 6 sollen nachfolgend die einzelnen Bewegungsphasen des Gurtbringers bei der Zuführbewegung Z und der Rückführbewegung R in Verbindung mit dem Aus- und Einschwenken des Gurtfingers 6 in seine Ausschwenk-und Einschwenkposition gesteuert durch die als Kulissensteuerung ausgebildete Hysteresesteuerung der Steuereinrichtung erläutert werden.

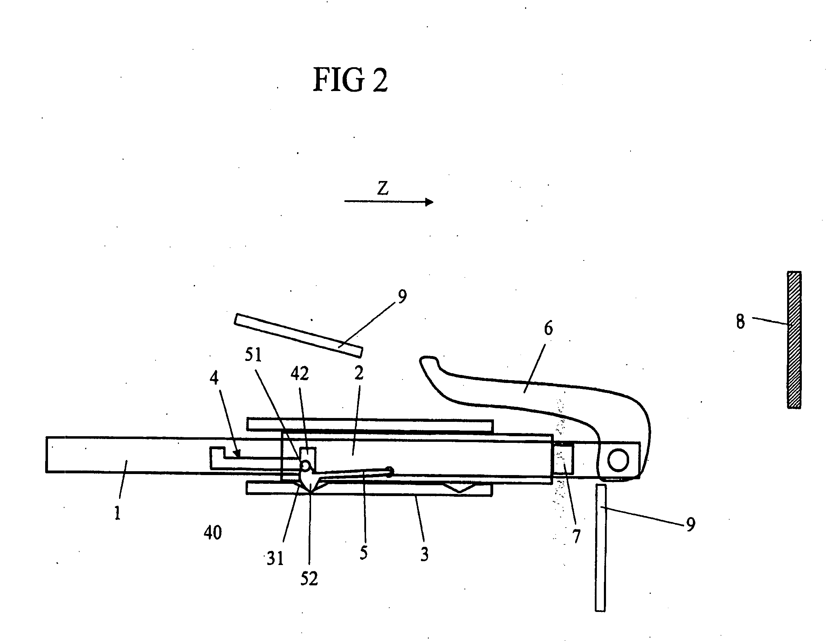

In der Ruheposition P₁ des Gurtbringers befindet sich der Stift 51 des Mitnehmers 5 in der Freistellung 42 der Kulisse 4 und der keilförmige Dorn 52 des Mitnehmers 5 auf der Innenfläche 30 der Führungseinrichtung 3. Wird die Schubstange 1 in Zuführrichtung Z angetrieben, so gleitet der keilförmige Dorn 52 des Mitnehmers 5 auf der Innenfläche 30 der Führungseinrichtung 3 in Zuführrichtung Z bis er gemäß Fig. 2 den ersten Freigang 31 in der Innenfläche 30 der Führungseinrichtung 3 erreicht hat und infolge der Anfederung des Mitnehmers 5 in Richtung auf die Innenfläche 30 der Führungseinrichtung 3 in den ersten Freigang 31 eingreift. Während dieser Bewegungsphase des Gurtbringers befindet sich die Führungseinrichtung 3 unterbrechungsfrei in Kontakt mit dem Auslöseelement 7, so dass der Gurtfinger 6 in seiner Einschwenkposition, die er in der Ruheposition P₁ des Gurtbringers eingenommen hat, verharrt. Mit dem Einschwenken des Mitnehmers 5 in den ersten Freigang 31 in der Innenfläche 30 der Führungseinrichtung 3 ist der Stift 51 des Mitnehmers 5 aus dem Freischnitt 42 der Kulisse 4 herausbewegt worden und befindet sich in der Kulissenbahn 40 der Kulisse 4.

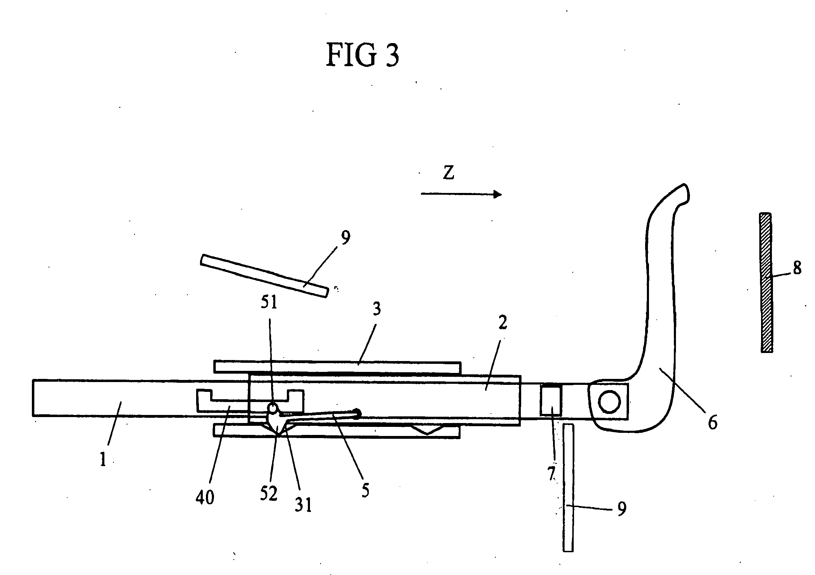

Bei weiterem in Fig. 3 schematisch dargestelltem Vorschub der Schubstange 1 in Zuführrichtung Z wird der Mitnehmer 3 durch den in den ersten Freigang 31 einrastenden keilförmigen Dorn 52 arretiert, so dass der Schieber 2 in Bezug auf die Führungseinrichtung 3 verharrt und damit die Wirkverbindung zwischen dem Schieber 2 und dem Auslöselement 7 aufgehoben wird, so dass der Gurtfinger 6 in seine Ausschwenkposition verschwenkt wird. Wie der schematischen Darstellung gemäß Fig. 3 weiter zu entnehmen ist, befindet sich dabei der Gurtfinger 6 noch in hinreichendem Abstand vom Sicherheitsgurt 8 in seiner Bereitstellungsposition.

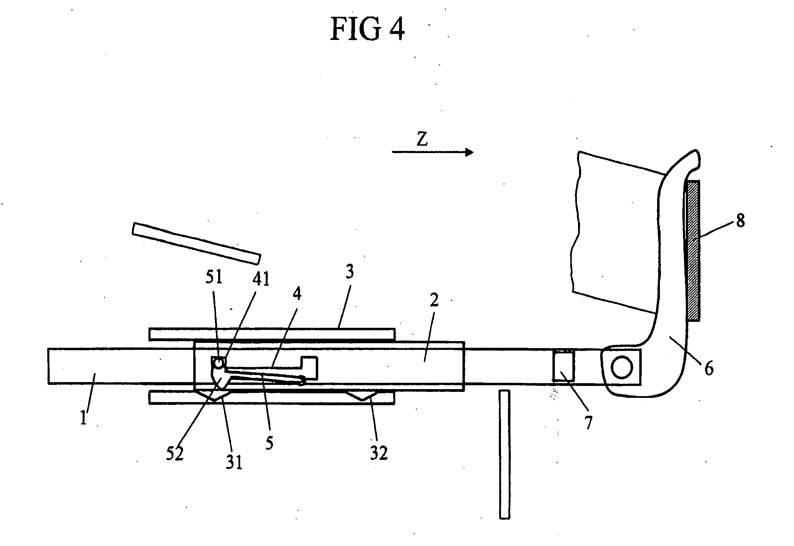

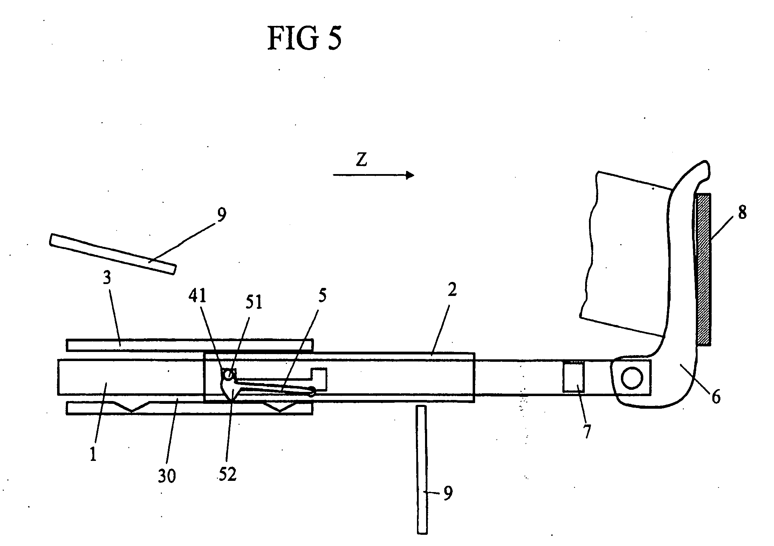

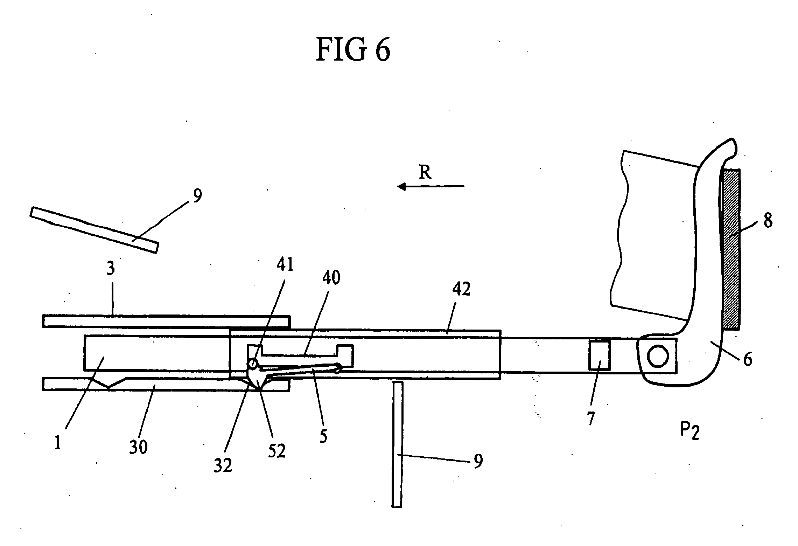

Bei weiterem Vorschub der Schubstange 1 in Zuführrichtung Z erreicht der Mitnehmerstift 51 in der Darstellung gemäß Fig. 4 das Ende der Kulissenbahn 40, so dass der Schieber 2 in Zuführrichtung Z mit der Vorschubbewegung der Schubstange 1 mitgenommen und der keilförmige Dorn 52 des Mitnehmers 5 aus dem ersten Freigang 31 herausbewegt wird, wobei der Freischnitt 41 am Ende des Kulissenabschnitts 40 eine Schwenkbewegung des Mitnehmers zum Herausführen des keilförmigen Dorns 52 gestattet. Fig. 4 zeigt in schematischer Darstellung diese Bewegungsphase des Gurtbringers während des Vorschubs in Zuführrichtung Z, in der der Gurtfinger 6 den Sicherheitsgurt 8 aufgenommen hat und bei der weiteren Zuführbewegung in die Anbietposition mitführt. Der in dem Freischnitt 41 der Kulisse 4 gemäß Fig. 5 festgelegte Mitnehmerstift 51 des Mitnehmers 5 bewirkt eine Mitnahme des Schiebers 2 bei der weiteren Vorschubbewegung der Schubstange 1, wobei der keilförmige Dorn 52 des Mitnehmers 5 an der Innenfläche 30 der Führungsschiene 3 entlang gleitet bis er beim maximalen, in Fig. 6 schematisch dargestellten Vorschub der Schubstange 1 in den zweiten, keilförmigen Freigang 32 einfällt. Mit dem Ende der Zuführbewegung der Schubstange 1 und des Schiebers 3 ist die Anbietposition P₂ des Gurtbringers erreicht, in der der Fahrzeuginsasse den Sicherheitsgurt 8 vom Gurtbringer abnehmen und anlegen kann oder in der der Gurtbringer den Sicherheitsgurt 8 für eine vorgegebene Anbietzeit zur Abnahme vorhält, bevor er in die Ruheposition P₁ zurückfährt.

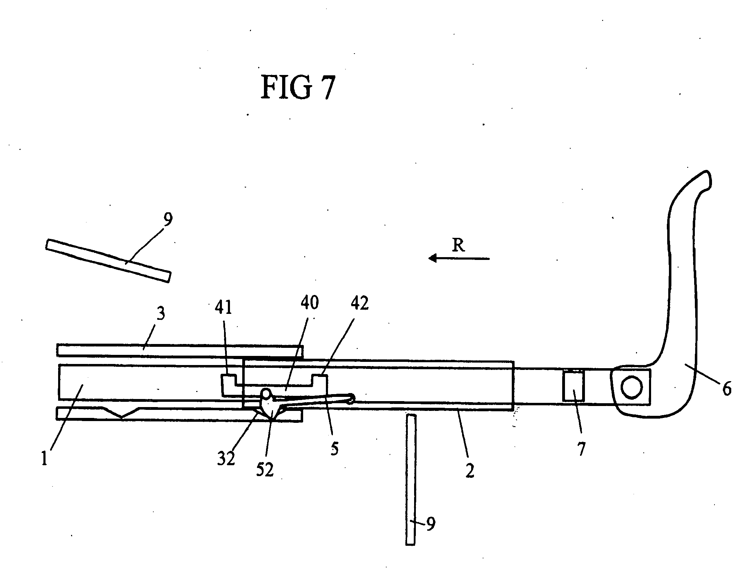

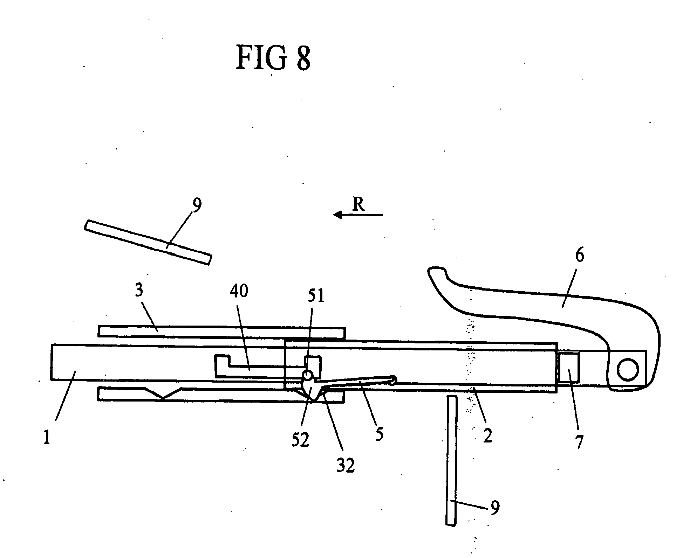

Bei Einleitung der in Fig. 7 schematisch dargestellten Bewegung des Gurtbringers in Rückführrichtung R verharrt der Schieber 2 aufgrund des in den zweiten Freigang 32 eingerasteten keilförmigen Doms 52 des Mitnehmers 5 in seiner ausgefahrenen Extremposition, während die Schubstange 1 die Rückführbewegung einleitet, so dass die Kulissenbahn 40 am Mitnehmerstift 51 des Mitnehmers 5 gemäß Fig. 7 entlanggleitet bis sich der Mitnehmerstift 51 des Mitnehmers 5 gemäß Fig. 8 im Bereich des Freischnitts 42 der Kulisse 4 befindet, in der der Schieber 2 wiederum in Wirkverbindung mit dem Auslöseelement 7 tritt, so dass der Gurtfinger 6 in seine Einschwenkposition zurückgeschwenkt wird.

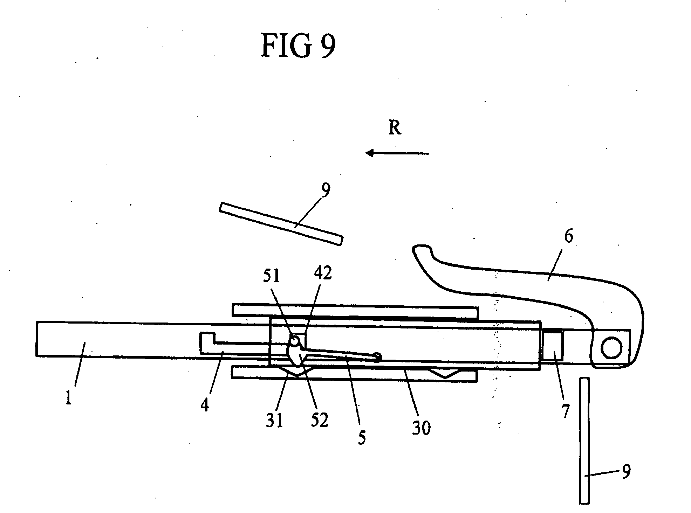

Da der Mitnehmerstift 51 in den Freischnitt 42 der Kulisse 4 gleiten kann, wird der keilförmige Dorn 52 des Mitnehmers 5 aus dem zweiten, keilförmigen Freigang 32 herausgeführt und analog zur Bewegungsphase gemäß Fig. 5 entlang der Innenfläche 30 der Führungseinrichtung 3 während der Rückführbewegung R des Gurtbringers bewegt bis er gemäß Fig. 9 das Ende der Kulissenbahn 40 und damit den Freischnitt 42 erreicht hat, wo er erneut in den ersten Freigang 31 der Innenfläche 30 der Führungseinrichtung 3 einfallen kann.

Während der gesamten Bewegungsphase von der in Fig. 8 dargestellten Kontaktierung des Schiebers 2 mit dem Auslöseelement 7 bis zu der in Fig. 9 dargestellten Einfahrbewegung des Gurtbringers in die Ruheposition P₁ ist der Gurtbringer 6 in seine Einschwenkposition eingeschwenkt, so dass unabhängig von der Position des Sicherheitsgurtes 8 oder dessen Verbindung mit dem Gurtfinger 6 sichergestellt ist, dass entweder der Gurtfinger 6 an dem in seiner Bereitstellungsposition befindlichen Sicherheitsgurt 8 vorbeibewegt wird oder der Sicherheitsgurt 8 den Gurtfinger 6 verlassen hat.

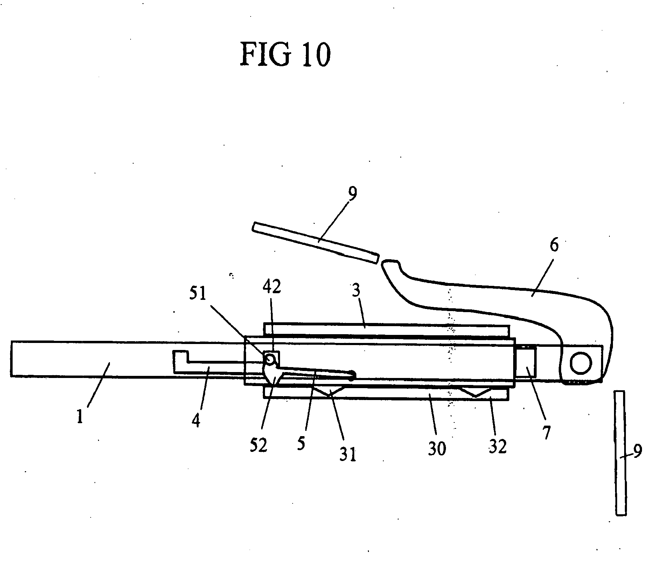

Bei weiterer Rückführbewegung de Schubstange 1 verharrt der Mitnehmer 5 mit seinem Mitnehmerstift 51 im Freischnitt 42 der Kulisse 4 auch bei vorübergehendem Einrasten in dem ersten Freigang 31 infolge der Anfederung des Mitnehmers 5 in Richtung auf die Innenfläche der Führungseinrichtung 3 bis der Gurtbringer seine in Fig. 10 schematisch dargestellte voll eingefahrene Endstellung erreicht hat, die mit der in Fig. 1 dargestellten Ruheposition P₁ übereinstimmt.

Alternativ zu der in den Fig. 1 bis 10 dargestellten mechanischen Hysteresesteuerung kann eine elektronische Hystereseeinstellung vorgesehen werden, die die Schaltpunkte zum Ein- und Ausschwenken des Gurtfingers mittels einer Bahnsteuerung oder mit der Vorschubeinrichtung gekoppelter Sensorelemente festlegt.

In den Fig. 11 und 12 ist eine schematische Seitenansicht des Gurtbringers im Bereich der Gurtfangeinrichtung bei ein- und ausgeschwenktem Gurtfinger 6 zur Erläuterung des Aufbaus und der Funktion der Auslöseeinrichtung, der Schwenkeinrichtung, der Verriegelungseinrichtung und der Notbetriebseinrichtung dargestellt.

Fig. 11 zeigt den Gurtbringer in der Ruheposition vor Beginn der Zuführung, in der die Schubstange 1 in die Innenverkleidung 9 eingefahren ist und durch die Innenverkleidung 9 verdeckt wird. Vom Kraftfahrzeuginnenraum her ist vom Gurtbringer in dieser Position des Gurtbringers nur die Außenseite des Gurtfingers 6 der am vorderen Ende der Schubstange 1 angeordneten Gurtfangeinrichtung sichtbar, der die Öffnung in der Innenverkleidung 9 im Wesentlichen verschließt. Die Schubstange 1 des Gurtbringers ist über einen Teil ihrer Länge von dem Schieber 2 und dieser von der Führungseinrichtung 3 umgeben, mit der der Gurtbringer an der Kraftfahrzeugkarosserie befestigt ist und an der ein Motor und eine mit dem Motor verbundene Getriebeeinrichtung angeordnet sind, die als Antrieb zur Zuführung bzw. Rückführung der Schubstange 1 und des mit der Schubstange 1 über die Kulissensteuerung gemäß den Fig. 1 bis 10 verbundenen Schiebers 2 dienen. Während der Zuführung des Gurtbringers bewegt sich die Schubstange 1 durch die Öffnung in der Innenverkleidung 9, ergreift mit der Gurtfangeinrichtung den Sicherheitsgurt und führt diesen in die Anbietposition, in der eine auf einem Kraftfahrzeugsitz sitzende Person den Sicherheitsgurt leicht fassen kann, um sich anzuschnallen.

Die Gurtfangeinrichtung weist eine Schwenkeinrichtung mit dem Gurtfinger 6 auf, der während der Zuführung in Bewegungsrichtung in die quer zur Bewegungsbahn verlaufende Ausschwenkposition verschwenkt wird und den Sicherheitsgurt ergreift. Das Verschwenken des Gurtfingers 6 während der Zu- und Rückführung wird - wie vorstehend anhand der Fig. 1 bis 10 erläutert wurde - durch das Auslöseelement 7 ausgelöst und erfolgt durch die Schwenkeinrichtung, die so ausgebildet ist, dass sowohl das Ausschwenken des Gurtfingers 6 in die Ausschwenkposition als auch das Einschwenken des Gurtfingers 6 in die Einschwenkposition durch die Zu- bzw. Rückführbewegung der Schubstange 1 gesteuert werden.

Die Schwenkeinrichtung umfasst eine Verriegelungseinrichtung, mittels derer der Gurtfinger 6 in der Ausschwenkposition verriegelt wird, so dass ein Einschwenken des Gurtfingers 6 durch die Kraftwirkung des Sicherheitsgurtes nicht möglich ist. Die Funktionsweise der Schwenkeinrichtung und der Verriegelungsvorrichtung wird nachfolgend näher erläutert.

Die mit dem Auslöseelement 7 in Wirkverbindung stehende Schwenkeinrichtung ist durch mehrere verschiebbare Elemente und mechanische Federn ausgebildet und weist ein Verriegelungselement 10 und ein Anschlagelement 12a, 12b auf, die im wesentlichen parallel zur Schubstange 1 angeordnet sind. Das Auslöseelement 7 und das Anschlagelement 12a, 12b sind über zwei als Zugfedern ausgebildete Federelemente 15, 16 mit der Schubstange 1 verbunden und können parallel zur Schubstange 1 verschoben werden. Das Verriegelungselement 10 ist über eine Drehachse 17 mit dem Auslöseelement 7 derart verbunden, dass es um die Drehachse 17 verschwenkbar ist. In der Ruheposition des Gurtbringers erstreckt sich das Verriegelungselement 10 im wesentlichen parallel zur Verschiebungsachse V und steht mit dem einen Ende des Auslöseelements 7 in kraftschlüssiger Verbindung. Darüber hinaus ist das Verriegelungselement 10 durch eine in Fig. 11 nicht dargestellte Dreh- oder Biegefeder entgegen dem Uhrzeigersinn gegenüber dem Auslöseelement 7 vorgespannt.

In der Ruheposition vor Beginn der Zuführung ist die mit dem Auslöseelement 7 verbundene Zugfeder 15 in maximal gedehntem Zustand ist. Dadurch wird das Auslöseelement 7 über die kraftschlüssige Verbindung des Schiebers 2 mit dem Verriegelungselement 10, das mit dem Auslöseelement 7 über die Drehachse 17 verbunden ist, vorgespannt und in einer relativ zur Schubstange 1 in Zuführrichtung Z maximal ausgelenkten Position gehalten.

Das Auslöseelement 7 umfasst einen Kopplungsbereich in Form eines ersten Zahnsegmentabschnittes 71, der sich entlang der Verschiebungsachse V auf einem geradlinigen Abschnitt des Auslöseelement 7 erstreckt. Dieser Zahnsegmentabschnitt 71 greift in ein aus zwei Zahnritzeln 13a, 13b gebildetes Getriebe, das wiederum in einen Kopplungsabschnitt des Gurtfingers 6 in Form eines zweiten Zahnsegmentabschnittes 61 eingreift. Die Zahnritzel 13a, 13b und der Gurtfinger 6 sind über jeweils eine relativ zur Schubstange 1 ortsfeste Drehachse drehbar gelagert. Entlang eines von der Drehachse des Gurtfingers 6 radial beabstandeten Kreisabschnittes erstreckt sich der zweite Zahnsegmentabschnitt 61, der in das zweite Zahnritzel 13b eingreift.

Aufgrund der kraftschlüssigen Verbindung zwischen dem Schieber 2 und dem Verriegelungselement 10 und der Kopplung des Verriegelungselementes 10 mit dem Auslöseelement 7 über die Drehachse 17, wirkt die von der Kulissensteuerung bestimmte Druckkraft des Schiebers 2 gegen die Federkraft der Zugfeder 15, so dass der Schieber 2 das Auslöseelement 7 entlang der Verschiebungsachse V in eine Ruhelage drückt, in der das Auslöseelement 7 in Zuführrichtung Z relativ zur Schubstange 1 maximal ausgelenkt ist und über die Zahnritzel 13a, 13b den Gurtfinger 6 in der Einschwenkposition hält. Die Ruhelage des Auslöseelements 7 kann dabei durch einen mechanischen Anschlag definiert sein, der die Auslenkung des Auslöseelements 7 und folglich auch die Dehnung der Zugfeder 15 begrenzt. In dieser Ruhelage des Auslöseelements 7 greifen die Zähne des Zahnritzels 13a in den der Zugfeder 15 zugewandten Anfangsbereich des linearen Zahnsegmentabschnittes 71 ein.

Das Verriegelungselement 10 erstreckt sich in der Ruheposition im wesentlichen parallel zur Verschiebungsachse V des Auslöseelements 7 und liegt dabei auf dem Anschlagelement 12a, 12b auf. Das Anschlagelement ist zweiteilig aus einem Anschlag 12a und einer Geradführung 12b aufgebaut, die aber so mit einander verbunden sind, dass sie eine Einheit bilden. Die mit der Geradführung 12b des Anschlagelementes 12a, 12b verbundene Zugfeder 16 ist in der Ruheposition entspannt. Der Verschiebeweg des Anschlagelementes 12a, 12b kann in beide Richtungen entlang der Verschiebungsachse V mittels mechanischer Anschläge begrenzt werden. Wenn die Schubstange 1 aus der in Fig. 11 dargestellten Ruheposition bewegt wird, wird der Schieber 2 über die Kulissensteuerung der Schubstange 1 in Zuführrichtung Z folgen und dabei zunächst die kraftschlüssige Verbindung zum Verriegelungselement 10 und somit auch zum Auslöseelement 7 aufrechterhalten.

Während der weiteren Bewegung der Schubstange 1 in Zuführrichtung wird durch die Kulissensteuerung der kraftschlüssige Kontakt des Schiebers 2 mit dem Verriegelungselement 10 und damit mit dem Auslöseelement 7 aufgehoben und das Auslöseelement 7 unter Einwirkung der Zugfeder 15 entgegen der Zuführrichtung Z relativ zur Schubstange 1 verschoben. Durch die Wirkverbindung des Auslöseelements 7 mit den Zahnritzeln 13a, 13b und der Zahnritzel 13a, 13b mit dem Gurtfinger 6 bewirkt die Verschiebung des Auslöseelements 7 eine Rotation der Zahnritzel 13a, 13b und so das Verschwenken des Gurtfingers 6 in die quer zur Bewegungsbahn der Gurtfangeinrichtung verlaufende, in Fig. 12 dargestellte Ausschwenkposition.

Bei Erreichen der Ausschwenkposition greift das erste Zahnritzel 13a in den von der Zugfeder 15 abgewandten Endabschnitt des Zahnsegmentabschnittes 71 am Auslöseelement 7, wie in Fig. 12 dargestellt, und das Verschwenken des Gurtfingers 6 ist abgeschlossen. Zur genauen Festlegung der Ausschwenkposition kann die maximale Auslenkung des Gurtfingers 6 beispielsweise durch einen mechanischen Anschlag zwischen dem Gurtfinger 6 und der Schubstange 1 begrenzt werden.

Durch die Verschiebung des Auslöseelements 7 während des Verschwenkvorganges des Gurtfingers 6 ist auch das Verriegelungselement 10 relativ zum Anschlagelement 12a, 12b verschoben worden. Sobald das Gurtfinger 6 die Ausschwenkposition erreicht hat, wird das Verriegelungselement 10 nicht mehr vom Anschlagelement 12a unterstützt und durch die mittels einer Dreh- oder Biegefeder bewirkte Vorspannung gegenüber dem Auslöseelement 7 um die Drehachse 17 relativ zum Auslöseelement 7 rotiert, so dass das dem Gurtfinger 6 zugewandte Ende des Verriegelungselements 10 in Zuführrichtung Z gesehen vor dem Anschlagelement 12a zu liegen kommt. Weil das Anschlagelement 12a, 12b durch die Federkraft der Zugfeder 16 relativ zur Schubstange 1 in Position gehalten wird, ist das Verriegelungselement 10 und somit auch das Auslöseelement 7 in Zuführrichtung Z relativ zur Schubstange 1 blockiert. Der Gurtfinger 6 ist auf diese Weise verriegelt und kann in der weiteren Zuführung nicht durch die Kraftwirkung des Sicherheitsgurtes auf den Gurtfinger 6 eingeschwenkt werden.

Bei der normalen Rückführung der Schubstange 1, angetrieben durch den Motorantrieb, läuft der Verschwenkvorgang des Gurtfingers 6 rückwärts ab. Während der Rückführung tritt dabei der Schieber 2 gesteuert durch die Kulissensteuerung in eine kraftschlüssige Verbindung mit dem Verriegelungselement 10, so rotiert dieses aus der Winkelstellung in der Verriegelungsposition in seine Ausgangslage zurück und wird somit nicht mehr durch das Anschlagelement 12a blockiert, so dass der Gurtfinger 6 entriegelt ist. Gleichzeitig wird das Auslöseelement 7 unter Einwirkung der Zugfeder 15 in die ebenfalls in Fig. 11 dargestellte Lage zurückgezogen und das über das Verriegelungselement 10 mit dem Schieber 2 kraftschlüssig verbundene Auslöseelement 7 wird relativ zur Schubstange 1 entgegen der Rückführrichtung R verschoben, und der Gurtfinger 6 in seine Einschwenkposition eingeschwenkt.

Zur Erläuterung einer manuellen Rückführung der Schubstange 1 beispielsweise im Notfallbetrieb bei Ausfall der elektrischen Versorgung wird auf die Beschreibung der DE 10 2005 017750.6 verwiesen, auf die in diesem Zusammenhang Bezug genommen wird.

### Bezugszeichenliste

- 1: Schubstange
- 2: Schieber
- 3: Führungseinrichtung
- 4: Kulisse
- 5: Mitnehmer
- 6: Gurtfinger
- 7: Auslöseelement
- 8: Sicherheitsgurt
- 9: Innenverkleidung
- 10: Verriegelungselement
- 11: Steuerelement
- 12a: Erstes Teil des Anschlagelementes
- 12b: Zweites Teil des Anschlagelementes
- 13a: Erstes Zahnritzel des Getriebes
- 13b: Zweites Zahnritzel des Getriebes
- 15: Als Zugfeder ausgebildetes zweites Federelement
- 16: Als Zugfeder ausgebildetes drittes Federelement
- 17: Drehachse
- 30: Innenfläche
- 31, 32: Freigänge
- 40: Kulissenabschnitt
- 41, 42: Freischnitte
- 51: Stift
- 52: keilförmiger Dorn
- 61: Zahnsegmentabschnitt am Gurtfinger
- 71: Zahnsegmentabschnitt am Auslöseelement
- P0: Ruheposition
- P1: Anbietposition
- R: Rückführrichtung
- V: Verschiebungsachse
- Z: Zuführrichtung

## Patentansprüche

1. Verfahren zur Steuerung eines Gurtbringers während einer Zuführbewegung (Z) zum Aufnehmen und Zuführen eines Sicherheitsgurtes in eine für einen Benutzer ergonomisch günstige Anbietposition (P₂), in der ein den Sicherheitsgurt aufnehmender Gurtfinger (6) in eine im Wesentlichen quer zur Bewegungsbahn des Gurtbringers ausgerichtete Ausschwenkposition ausgeschwenkt wird, und während einer Rückführbewegung (R), in der der Gurtfinger (6) in eine mit der Bewegungsbahn im Wesentlichen übereinstimmende Einschwenkposition eingeschwenkt und der Gutbringer in einer Ruheposition (P₁) bewegt wird,
**dadurch gekennzeichnet,**
**dass** das Aus- und Einschwenken des Gurtfingers (6) bei der Zuführ- und Rückführbewegung (Z, R) des Gurtbringers an unterschiedlichen Positionen der Bewegungsbahn des Gurtbringers zwischen der Ruheposition (P₁) und der Anbietposition (P₂) ausgelöst wird.

2. Verfahren nach Anspruch 1, **dadurch gekennzeichnet, dass** der Gurtfinger (6) bei der Zuführbewegung (Z) des Gurtbringers aus der Ruheposition (P₁) in die Anbietposition (P₂) und bei der Rückführbewegung (R) des Gurtbringers aus der Anbietposition (P₂) in die Ruheposition (P₁) in vorgegebenen Abständen vor dem Erreichen des in einer Bereitstellungsposition befindlichen Sicherheitsgurtes (8) in seine Ausschwenkposition bzw. Einschwenkposition verschwenkt wird.

3. Verfahren nach Anspruch 1 oder 2, **dadurch gekennzeichnet, dass** der Gurtbringer bei der Rückführbewegung (R) in ein Gehäuse bewegt wird, wobei der Gurtfinger (6) in der Ruheposition (P₁) des Gurtbringers vorzugsweise eine Gehäuseöffnung bündig abschließt und der Gurtfinger (6) bei der Zuführbewegung (Z) während des Verlassens oder unmittelbar nach dem Verlassen des Gehäuses in die Ausschwenkposition verschwenkt wird.

4. Verfahren nach Anspruch 2 oder 3, **dadurch gekennzeichnet, dass** das Ein- und Ausschwenken des Gurtfingers (6) in die Einschwenk- und Ausschwenkposition mittels einer Hysteresesteuerung ausgelöst wird.

5. Verfahren nach mindestens einem der vorangehenden Ansprüche, **dadurch gekennzeichnet, dass** der Gurtfinger (6) bei der Zuführbewegung (Z) des Gurtbringers vor der Aufnahme des Sicherheitsgurtes (8) in der Ausschwenkposition verriegelt und bei der Rückführung des Gurtbringers einriegelt wird.

6. Verfahren nach Anspruch 5, **dadurch gekennzeichnet, dass** der in der Ausschwenkposition verriegelte Gurtfinger (6) durch Krafteinwirkung auf den Gurtfinger (6) in seine Einschwenkposition bewegbar und der Gurtbringer manuell in die Ruheposition (P₁) verschiebbar ist.

7. Gurtbringer für ein Kraftfahrzeug mit einer Gurtfangeinrichtung (6, 7, 10 - 19) zum Aufnehmen und Zuführen eines Sicherheitsgurtes (8) in eine für einen Kraftfahrzeuginsassen ergonomisch günstige Anbietposition (P₂), einer Vorschubeinrichtung (1 - 3) zum Bewegen der Gurtfangeinrichtung (6, 7, 10 - 19) von einer Ruheposition (P₁) in die Anbietposition (P₂), wobei die Gurtfangeinrichtung (6, 7, 10 - 19) einen schwenkbar an der Vorschubeinrichtung (1 - 3) angelenkten Gurtfinger (6), eine Schwenkeinrichtung , die den Gurtfinger (6) von einer mit der Bewegungsbahn (V) des Gurtbringers im Wesentlichen übereinstimmenden Einschwenkposition in eine im Wesentlichen quer zur Bewegungsbahn (V) des Gurtbringers ausgerichtete Ausschwenkposition verschwenkt und eine den Gurtfinger (6) in der Ausschwenkposition verriegelnde Verriegelungseinrichtung (10) enthält,
**gekennzeichnet durch**
eine das Aus- und Einschwenken des Gurtfingers (6) bei der Zuführ- und Rückführbewegung (R) des Gurtbringers an unterschiedlichen Positionen der Bewegungsbahn (V) des Gurtbringers zwischen der Ruheposition (P₁) und der Anbietposition (P₂) auslösende Steuereinrichtung (4, 5, 30 - 32).

8. Gurtbringer nach Anspruch 7, **dadurch gekennzeichnet, dass** die Steuereinrichtung (4, 5, 30 - 32) eine Relativbewegung von Teilen der Vorschubeinrichtung (1 - 3) derart steuert, dass mindestens ein Teil der Vorschubeinrichtung (1 - 3) auf ein die Schwenkbewegungen des Gurtfingers (6) in die Aus- und Einschwenkposition initiierendes Auslöseelement (7) einwirkt.

9. Gurtbringer nach Anspruch 7 oder 8, **dadurch gekennzeichnet, dass** die Steuereinrichtung (4, 5, 30 - 32) als Hysteresesteuerung ausgebildet ist, die während der Zuführbewegung (Z) des Gurtbringers das Ausschwenken des Gurtfingers (6) in die Ausschwenkposition nahe der Ruheposition (P₁) des Gurtbringers und während der Rückführbewegung (R) des Gurtbringers das Einschwenken des Gurtfingers (6) in die Einschwenkposition nahe der Anbietposition (P₂) auslöst.

10. Gurtbringer nach Anspruch 9, **dadurch gekennzeichnet, dass** die Hysteresesteuerung der Steuereinrichtung (4, 5, 30 - 32) als mit der Vorschubeinrichtung (1 - 3) zusammenwirkende Kulissensteuerung ausgebildet ist.

11. Gurtbringer nach Anspruch 10, **dadurch gekennzeichnet, dass** die Kulissensteuerung
- eine Kulisse (4), die in einer den Gurtfinger (6) und das Auslöseelement (7) aufnehmenden Schubstange (1) der Vorschubeinrichtung (1 - 3) angeordnet ist,
- einen mit der Kulisse (4) zusammenwirkenden Mitnehmer (5), der an einem auf der Schubstange (1) in der Bewegungsbahn (V) des Gurtbringers gleitend angeordneten und auf das Auslöseelement (7) einwirkenden Schieber (2) angelenkt ist und
- zwei mit dem Mitnehmer (5) zusammenwirkende Freigänge (31, 32) aufweist, die beabstandet zueinander in einer den Schieber (2) formschlüssig aufnehmenden, hülsenförmigen Führungseinrichtung (3) der Vorschubeinrichtung (1 - 3) angeordnet sind.

12. Gurtbringer, nach Anspruch 11, **dadurch gekennzeichnet, dass** der Gurtfinger (6) bei einem Kontakt des Schiebers (2) mit dem Auslöseelement (7) in die Einschwenkposition und bei fehlendem Kontakt des Schiebers (2) mit dem Auslöseelement (7) in die Ausschwenkposition verschwenkt ist.

13. Gurtbringer nach Anspruch 11 oder 12, **dadurch gekennzeichnet, dass** die Kulisse (4) einen parallel zur Bewegungsbahn (V) des Gurtbringers verlaufenden Kulissenabschnitt (40) aufweist, an dessen Enden senkrecht zur Bewegungsbahn (V) des Gurtbringers verlaufende Freischnitte (41, 42) angeordnet sind.

14. Gurtbringer nach einem der vorangehenden Ansprüche 11 bis 13, **dadurch gekennzeichnet, dass** die Freigänge (31, 32) als keilförmige Einschnitte in der Innenfläche (30) der hülsenförmigen Führungseinrichtung (3) ausgebildet sind, in die ein keilförmiger Dorn (52) des schwenkbar am Schieber (2) angelenkten Mitnehmers (5) eingreift.

15. Gurtbringer nach einem der vorangehenden Ansprüche 11 bis 14, **dadurch gekennzeichnet, dass** der Mitnehmer (5) in Richtung der Innenfläche (30) der hülsenförmigen Führungseinrichtung (3) angefedert ist.

## Claims

1. A method for controlling a belt hand-over device during a delivery movement (Z) for taking up and delivering a seat belt into a presentation position (P₂) ergonomically favorable for a user, in which a belt finger (6) taking up the seat belt is extended into an extended position, substantially oriented transversely to the moving path of the belt hand-over device, and during a return movement (R), in which the belt finger (6) is retracted into a retracted position substantially coinciding with the moving path and the belt hand-over device is moved in a rest position (P₁), **characterized in that** the extending and retraction of the belt finger (6) during the delivery and return movements (Z, R) of the belt hand-over device are triggered at different positions in the moving path of the belt hand-over device between the rest position (P₁) and the presentation position (P₂).

2. The method as claimed in claim 1, **characterized in that** during the delivery movement (Z) bringing the belt hand-over device from the rest position (P₁) into the presentation position (P₂) and during the return movement (R) of the belt hand-over device from the presentation position (P₂) into the rest position (P₁), the belt finger (6) is swiveled into its extended position or its retracted position at predetermined intervals before reaching the seat belt (8) situated in its readiness position.

3. The method as claimed in claim 1 or 2, **characterized in that** the belt hand-over device is moved into a housing during the return movement (R), the belt finger (6) sealing off flush an opening in the housing when the belt hand-over device is in the rest position (P₁) and the belt finger (6) during the delivery movement (Z) being swiveled into the extended position as it leaves the housing or immediately thereafter.

4. The method as claimed in claims 2 and 3, **characterized in that** the retraction and extending of the belt finger (6) into the retracted and extended position are triggered by means of a hysteresis control.

5. The method as claimed in one of the preceding claims, **characterized in that** in the return movement (Z) of the belt hand-over device the belt finger (6) is locked in the extended position before the seat belt (8) is taken up, and is locked in during the return of the belt hand-over device.

6. The method as claimed in claim 5, **characterized in that** the belt finger (6) locked in the extended position can be moved to its retracted position by force exerted on the belt finger (6) and the belt hand-over device slid manually into the rest position (P₁).

7. A belt hand-over device for a motor vehicle with a belt catcher (6, 7, 10-19) for taking up and delivering a seat belt (8) into a presentation position (P₂) ergonomically favorable for a vehicle occupant, a feed device (1-3) for moving the belt catcher (6, 7, 10-19) from a rest position (P₁) into the presentation position (P₂), the belt catcher (6, 7, 10-19) comprising a belt finger (6) rotatably articulated on the feed device (1-3), a swivel device which swivels the belt finger (6) from a retracted position substantially coinciding with the moving path (V) of the belt hand-over device into an extended position, substantially oriented transversely to the moving path (V) of the belt hand-over device, and a locking device (10) locking the belt finger (6) in the extended position, **characterized by** a control device (4, 5, 30-32) initiating the extension and retraction of the belt finger (6) during the delivery and return movement (R) of the belt hand-over device at different positions in the moving path (V) of the belt hand-over device between the rest position (P₁) and the presentation position (P₂).

8. The belt hand-over device as claimed in claim 7, **characterized in that** the control device (4, 5, 30-32) controls a relative movement of parts of the feed device (1-3) in such a way that at least a part of the feed device (1-3) acts on a trigger element (7) initiating the swiveling movements of the belt finger (6) into the extended and retracted positions.

9. The belt hand-over device as claimed in claim 7 or 8, **characterized in that** the control device (4, 5, 30-32) is preferably embodied as a hysteresis control, which during the delivery movement (Z) of the belt hand-over device initiates the extension of the belt finger (6) into the extended position close to the rest position (P₁) of the belt hand-over device and during the return movement (R) of the belt hand-over device initiates the retraction of the belt finger (6) into the retracted position close to the presentation position (P₂).

10. The belt hand-over device as claimed in claim 9, **characterized in that** the hysteresis control of the control device (4, 5, 30-32) is embodied as a link control interacting with the feed device (1-3).

11. The belt hand-over device as claimed in claim 10, **characterized in that** the link control
- a link (4), which is arranged in a push rod (1) of the feed device (1-3) accommodating the belt finger (6) and the trigger element (7),
- a driver (5), which interacts with the link (4) and is articulated on a slide (2), arranged so that it can slide on the push rod (1) in the moving path (V) of the belt hand-over device and acting on the trigger element (7) and
- two notches (31, 32) interacting with the driver (5), which are arranged at an interval from one another in a sleeve-shaped guide device (3) of the feed device (1-3) positively interlocking with the slide (2).

12. The belt hand-over device as claimed in claim 11, **characterized in that** the belt finger (6) is swiveled into the retracted position when the slide (2) comes into contact with the trigger element (7) and into the extended position in the absence of any contact between the slide (2) and the trigger element (7).

13. The belt hand-over device as claimed in claim 11 or 12, **characterized in that** the link (4) has a link section (40) running parallel to the moving path (V) of the belt hand-over device, at the ends of which section cut-outs (41-42) are arranged running perpendicular to the moving path (V) of the belt hand-over device.

14. The belt hand-over device as claimed in one of the preceding claims 11 to 13, **characterized in that** the notches (31-32) are formed as wedge-shaped indentations in the inner face (30) of the sleeve-shaped guide device (3), in which a wedge-shaped cotter (52) of the driver (5), rotatably articulated on the slide (2), engages.

15. The belt hand-over device as claimed in one of the preceding claims 11 to 14, **characterized in that** the driver (5) is sprung towards the inner face (30) of the sleeve-shaped guide device (3).

## Revendications

1. Procédé pour la commande d'un système approche-ceinture pendant un mouvement d'approche (Z) pour prendre et amener une ceinture de sécurité dans une position de présentation (P₂) favorable ergonomiquement pour un utilisateur, dans laquelle une patte de ceinture (6) qui reçoit la ceinture de sécurité est pivotée vers l'extérieur jusque dans une position de pivotement orientée essentiellement perpendiculairement à la trajectoire de déplacement du système approche-ceinture, et pendant un mouvement de retrait (R), dans lequel la patte de ceinture (6) est pivotée vers l'intérieur jusque dans une position de pivotement qui coïncide essentiellement avec la trajectoire de déplacement et le système approche-ceinture est déplacé jusque dans une position de repos (P₁),
**caractérisé en ce que**
le pivotement vers l'extérieur et le pivotement vers l'intérieur de la patte de ceinture (6) lors du mouvement d'approche et du mouvement de retrait (Z, R) du système approche-ceinture sont déclenchés à des positions différentes de la trajectoire de déplacement du système approche-ceinture entre la position de repos (P₁) et la position de présentation (P₂).

2. Procédé selon la revendication 1, **caractérisé en ce que** la patte de ceinture (6) est pivotée, lors du mouvement d'approche (Z) du système approche-ceinture hors de la position de repos (P₁) jusque dans la position de présentation (P₂) et lors du mouvement de retrait (R) du système approche-ceinture hors de la position de présentation (P₂) jusque dans la position de repos (P₁), à des distances prédéterminées avant d'atteindre la ceinture de sécurité (8) qui se trouve dans sa position d'attente, vers sa position pivotée vers l'extérieur ou respectivement sa position pivotée vers l'intérieur.

3. Procédé selon la revendication 1 ou 2, **caractérisé en ce que** le système approche-ceinture, lors du mouvement de retrait (R), est déplacé dans un boîtier, et la patte de ceinture (6), dans la position de repos (P₁) du système approche-ceinture, referme de préférence en affleurement une ouverture du boîtier, et, lors du mouvement de retrait (Z), la patte de ceinture (6) est pivoté dans la position pivotée vers l'extérieur pendant qu'il quitte le boîtier ou immédiatement après l'avoir quitté.

4. Procédé selon la revendication 2 ou 3, **caractérisé en ce que** le pivotement vers l'intérieur et le pivotement vers l'extérieur de la patte de ceinture (6) jusque dans la position pivotée vers l'intérieur ou la position pivotée vers l'extérieur est déclenché au moyen d'une commande à hystérésis.

5. Procédé selon l'une au moins des revendications précédentes, **caractérisé en ce que** la patte de ceinture (6), lors du mouvement d'approche (Z) du système approche-ceinture, est verrouillé dans la position pivotée vers l'extérieur avant la prise de la ceinture de sécurité (8), et est déverrouillé lors du retrait du système approche-ceinture.

6. Procédé selon la revendication 5, **caractérisé en ce que** la patte de ceinture (6) verrouillé dans la position pivotée vers l'extérieur est déplaçable jusque dans sa position pivotée vers l'intérieur en appliquant une force sur la patte de ceinture (6), et le système approche-ceinture est déplaçable manuellement jusque dans la position de repos (P₁).

7. Système approche-ceinture pour un véhicule automobile comprenant des moyens de prise de ceinture (6, 7, 10-19) pour prendre et amener une ceinture de sécurité (8) jusque dans une position de présentation (P₂) ergonomiquement favorable pour un passager du véhicule, un dispositif d'avance (1-3) pour déplacer les moyens de prise de ceinture (6, 7, 10-19) depuis une position de repos (P₁) jusque dans la position de présentation (P₂), lesdits moyens de prise de ceinture (6, 7, 10-19) comprenant une patte de ceinture (6) articulé en pivotement sur le dispositif d'avance (1-3), un dispositif de pivotement, qui fait pivoter la patte de ceinture (6) depuis une position pivotée vers l'intérieur qui coïncide sensiblement avec la trajectoire de déplacement (V) du système approche-ceinture jusque dans une position pivotée vers l'extérieur orientée sensiblement perpendiculairement à la trajectoire de déplacement (V) du système approche-ceinture, et un dispositif de verrouillage (10) qui verrouille la patte de ceinture (6) dans la position pivotée vers l'extérieur,
**caractérisé par**
un dispositif de commande (4, 5, 30-32) qui déclenche le pivotement vers l'extérieur et le pivotement vers l'intérieur de la patte de ceinture (6), lors du mouvement d'approche et du mouvement de retrait (R) du système approche-ceinture, à différentes positions de la trajectoire de déplacement (V) du système approche-ceinture entre la position de repos (P₁) et la position de présentation (P₂).

8. Système approche-ceinture selon la revendication 7, **caractérisé en ce que** le dispositif de commande (4, 5, 30-32) commande un mouvement relatif des parties du dispositif d'avance (1-3) de telle façon qu'une partie au moins du dispositif d'avance (1-3) agit sur un élément de déclenchement (7) qui initialise les mouvements de pivotement de la patte de ceinture (6) jusque dans la position pivotée vers l'extérieur et jusque dans la position pivotée vers l'intérieur.

9. Système approche-ceinture selon la revendication 7 ou 8, **caractérisé en ce que** le dispositif de commande (4, 5, 30-32) est réalisé sous forme de commande à hystérésis qui, pendant le mouvement d'approche (Z) du système approche-ceinture, déclenche le pivotement vers l'extérieur de la patte de ceinture (6) jusque dans la position pivotée vers l'extérieur à proximité de la position de repos (P₁) du système approche-ceinture, et qui, pendant le mouvement de retrait (R) du système approche-ceinture, déclenche le pivotement vers l'intérieur de la patte de ceinture (6) jusque dans la position pivotée vers l'intérieur à proximité de la position de présentation (P₂).

10. Système approche-ceinture selon la revendication 9, **caractérisé en ce que** la commande à hystérésis du dispositif de commande (4, 5, 30-32) est réalisée sous forme d'une commande à coulisseau coopérant avec le dispositif d'avance (1-3).

11. Système approche-ceinture selon la revendication 10, **caractérisé en ce que** la commande à coulisseau comprend :
- un coulisseau (4), agencé dans une tige de poussée (1), du dispositif d'avance (1-3), qui reçoit la patte de ceinture (6) et l'élément de déclenchement (7),
- un élément d'entraînement (5), coopérant avec le coulisseau (4), qui est articulé sur un tiroir (2) agencé en coulissement sur la tige de poussée (1) dans la trajectoire de déplacement (V) du système approche-ceinture et agissant sur l'élément de déclenchement (7), et
- deux dégagements (31, 32), coopérant avec l'élément d'entraînement (5), qui sont agencés à distance l'un de l'autre dans un dispositif de guidage (3), du dispositif d'avance (1-3) en forme de douille qui reçoit le tiroir (2) en coopération de formes.

12. Système approche-ceinture selon la revendication 11, **caractérisé en ce que** la patte de ceinture (6), lors d'un contact du tiroir (2) avec l'élément de déclenchement (7), est pivoté jusque dans la position pivotée vers l'intérieur et, en l'absence d'un contact du tiroir (2) avec l'élément de déclenchement (7), est pivoté jusque dans la position pivotée vers l'extérieur.

13. Système approche-ceinture selon la revendication 11 ou 12, **caractérisé en ce que** le coulisseau (4) comprend un tronçon de coulisseau (40) qui s'étend parallèlement à la trajectoire de déplacement (V) du système approche-ceinture, et aux extrémités duquel sont ménagés des dégagements (41, 42) qui s'étendent perpendiculairement à la trajectoire de déplacement (V) du système approche-ceinture.

14. Système approche-ceinture selon l'une des revendications 11 à 13, **caractérisé en ce que** les dégagements (31, 32) sont réalisés sous forme d'entailles en forme de coin dans la surface intérieure (30) du dispositif de guidage (3) en forme de douille, dans lesquelles s'engagent un ergot en forme de coin (52) de l'élément d'entraînement (5) articulé en pivotement sur le tiroir (2).

15. Système approche-ceinture selon l'une des revendications 11 à 14, **caractérisé en ce que** l'élément d'entraînement (5) est sollicité avec effet ressort en direction de la surface intérieure (30) du dispositif de guidage en forme de douille (3).
